# EUROPÄISCHE PATENTSCHRIFT

(11) **EP 1 888 383 B1**
(45) Veröffentlichungstag und Bekanntmachung des Hinweises auf die Patenterteilung: **07.10.2009**
(21) Anmeldenummer: 06761990.8
(22) Anmeldetag: 08.06.2006
(51) Int. Cl.: B60T 8/1755, B60W 30/02, B60W 10/18, B60W 10/04

(54) **VERFAHREN UND SYSTEM ZUR STEUERUNG VON FAHRZUSTÄNDEN EINES LANDFAHRZEUGS**
METHOD AND SYSTEM FOR CONTROLLING STATES OF TRAVEL OF A LAND CRAFT
PROCEDE ET SYSTEME DE COMMANDE DE CONDITIONS DE ROULAGE D'UN VEHICULE TERRESTRE

(30) Priorität: 09.06.2005 DE 102005026729
(43) Veröffentlichungstag der Anmeldung: 20.02.2008
(73) Patentinhaber: Lucas Automotive GmbH, 56070 Koblenz (DE)
(72) Erfinder: KNECHTGES, Josef, 56727 Mayen (DE)
(74) Vertreter: Schmidt, Steffen J.
(86) Internationale Anmeldenummer: PCT/EP2006/005491
(87) Internationale Veröffentlichungsnummer: WO 2007/016987

(56) Entgegenhaltungen:
- EP-A- 1 201 520
- DE-A1- 10 132 576
- US-A- 5 762 406
- US-A1- 2004 239 179

## Beschreibung

### Gebiet der Erfindung

Die vorliegende Erfindung betrifft im Allgemeinen Verfahren und Systeme zur Steuerung von Fahrzuständen eines Landfahrzeugs.

### Hintergrund der Erfindung

Landfahrzeuge sind im Allgemeinen mit Systemen ausgestattet, die eine Steuerung von Fahrzuständen des Landfahrzeugs ohne Mitwirkung des Fahrers ermöglichen. Derartige Systeme umfassen beispielsweise Systeme zur Fahrdynamikregelung, Antriebsschlupfregelung, Antiblockierregelung und dergleichen.

Derartige Systeme werden beispielsweise verwendet, um bei einer Kurvenfahrt eines Landfahrzeugs ein Untersteuern zu kompensieren. Unter Untersteuern oder einem untersteuernden Fahrzustand ist insbesondere zu verstehen, dass das Landfahrzeug aufgrund zu hoher Geschwindigkeit von einem von dem Fahrer vorgegebenen Kurvenradius abweicht, beispielsweise mit stark eingeschlagenen Rädern zum äußeren Kurvenrand rutscht; beim Untersteuern schiebt sich das Fahrzeug über die Vorderachse in Richtung des äußeren Kurvenrands, die Frontachse bricht stärker aus als die Hinterachse, und das Landfahrzeug erweckt den Anschein, weiterhin geradeaus fahren zu wollen.

Um ein Untersteuern zu kompensieren, ist es bekannt, wenigstens das kurveninnere Hinterrad, vorzugsweise abgesehen von dem kurvenäußeren Vorderrad alle Räder, gesteuert abzubremsen. Diese Maßnahmen wirken dem untersteuernden Fahrzustand entgegen, insbesondere weil die Fahrzeuggeschwindigkeit reduziert wird und das Landfahrzeug deshalb wieder auf den vom Fahrer gewünschten Kurvensradius gebracht werden kann. Das kurvenäußere Vorderrad wird dabei nicht abgebremst, damit dieses Rad die bestmögliche Seitenführung beibehält. Ein Abbremsen des kurvenäußeren Vorderrads würde vielmehr das Untersteuern verstärken. Einem Untersteuern kann zusätzlich entgegengewirkt werden, indem bei frontgetriebenen Landfahrzeugen das Antriebsmoment an den angetriebenen Vorderrädern reduziert wird.

Fahrzustandssteuernde Systeme werden auch verwendet, um ein Übersteuern von Landfahrzeugen bei Kurvenfahrt zu kompensieren. Unter Übersteuern oder einem übersteuernden Fahrzustand ist insbesondere zu verstehen, dass sich das Fahrzeug bei Kurvenfahrt mit dem Heck in Richtung des äußeren Kurvenrands bewegt, die Hinterachse in Kurven stärker ausbricht als die Vorderachse, und sich das Fahrzeug zur Innenseite der Kurve neigt, ein auf die Fahrzeughochachse in Richtung des Kurveninneren gerichtetes Giermoment auf das Landfahrzeug wirkt.

Um einem Übersteuern entgegen zu wirken, ist es bekannt, das kurvenäußere Vorderrad abzubremsen. Bei heckgetriebenen Fahrzeugen kann Übersteuern durch eine zusätzlich durchgeführte Reduktion von Antriebskräften an den angetriebenen Hinterrädern kompensiert werden.

In bestimmten Fällen kann es dazu kommen, dass, während Maßnahmen zur Kompensation von Untersteuern durchgeführt werden, ein Übersteuern auftritt. In solchen Fällen ist es üblich, die zur Untersteuerungskompensation verwendeten Maßnahmen zu beenden, um durch diese das Übersteuern nicht zu verstärken, und Maßnahmen einzuleiten, die dem Übersteuern entgegenwirken.

Ein Nachteil dieser Vorgehensweise besteht darin, dass das Landfahrzeug nicht in einen insgesamt gewünschten Fahrzustand gebracht wird und vielmehr unkontrollierbare Fahrzustände auftreten können.

Die Druckschrift EP 1 201 520 A1 offenbart eine Fahrzustandssteuerung, die ein Steuerverfahren für einen untersteuernden Fahrzustand, durch das beispielsweise ein Driften des Fahrzeugs vermieden oder unterdrückt wird, und ein Steuerverfahren für einen übersteuernden Fahrzustand umfasst, bei dem beispielsweise ein Drehen des Fahrzeugs vermieden oder unterdrückt wird. In einer Situation, in der eine Tendenz zum Übersteuern und zum Untersteuern gleichzeitig auftreten, wird der Fahrzustand des Fahrzeugs durch Beseitigen der Tendenz zum Übersteuern korrigiert und das Steuerverfahren für Untersteuern wird nicht angewandt.

Die Druckschrift US 5,762,406 offenbart ein System zur Fahrzustandssteuerung, bei dem das kurvenäußare Vorderrad und die beiden Hinterräder eines Fahrzeugs durch Bremseingriffe gesteuert werden. Bei einem gleichzeitigen Auftreten von übersteuernden und untersteuernden Fahrzuständen wird hinsichtlich der Bremseingriffe einer der beiden Fahrzustände priorisiert, indem für das Vorderrad das Steuerverfahren für Übersteuern und für die Hinterräder das Steuerverfahren für Untersteuern angestzt wird.

### Aufgabe der Erfindung

Aufgabe der vorliegenden Erfindung ist es, eine verbessere Steuerung von Fahrzuständen eines Landfahrzeugs beim Untersteuern und Übersteuern bereitzustellen.

### Kurzbeschreibung der Erfindung

Zur Lösung der obigen Aufgabe stellt die vorliegende Erfindung ein Verfahren und ein System gemäß den unabhängigen Ansprüchen bereit.

Bei dem erfindungsgemäßen Verfahren ist es vorgesehen, mittels eines ersten Steuerverfahrens, das zur Kompensation von untersteuernden Fahrzuständen des Landfahrzeugs bei Kurvenfahrt dient, an Rädern des Landfahrzeugs wirkende Bremskräfte und/oder Antriebskräfte gesteuert zu erzeugen, die einem aktuell vorliegenden untersteuernden Fahrzustand entgegen wirken, und mittels eines zweiten Steuerverfahrens, das zur Kompensation von übersteuernden Fahrzuständen des Landfahrzeugs bei Kurvenfahrt dient, an Rädern des Landfahrzeugs wirkende Bremskräfte und/oder Antriebsmomente gesteuert zu erzeugen, die einem aktuell vorliegenden übersteuernden Fahrzustand entgegen wirken. Insbesondere ist es bei dem erfindungsgemäßen Verfahren vorgesehen, das erste Steuerverfahren und das zweite Steuerverfahren gleichzeitig durchzuführen, wenn ein untersteuernder Fahrzustand und ein übersteuernder Fahrzustand gleichzeitig vorliegen.

Das erste Steuerverfahren umfasst vorzugsweise, wenigstens ein kurveninneres Rad, insbesondere das kurveninnere Hinterrad, des Landfahrzeugs gesteuert abzubremsen.

Ergänzend ist es vorgesehen, dass mittels des ersten Steuerverfahrens wenigstes ein äußeres Hinterrad des Landfahrzeugs gesteuert abgebremst wird, wobei das kurvenäußere Vorderrad nicht abgebremst wird.

Des Weiteren ist es möglich, dass mittels des ersten Steuerverfahrens an wenigstens einem angetriebenen Vorderrad wirkende Antriebskräfte gesteuert reduziert werden.

Das zweite Steuerverfahren umfasst vorzugsweise, das kurvenäußere Vorderrad des Landfahrzeugs gesteuert abzubremsen.

Ferner ist es möglich, dass das zweite Steuerverfahren an wenigstens einem angetriebenen Hinterrad des Landfahrzeugs wirkende Antriebskräfte gesteuert reduziert. Alternativ ist es vorgesehen, mittels des zweiten Steuerverfahrens an wenigstens einem angetriebenen Rad des Landfahrzeugs wirkende Antriebskräfte zu erhöhen.

Vorzugsweise wird das erste Steuerverfahren durchgeführt, wenn ein erster, für untersteuernde Fahrzustände vorgegebener Grenzwert vorliegt oder erreicht wird.

Als erster Grenzwert kann eine vorbestimmte Abweichung eines tatsächlichen Kurvenradius des Landfahrzeugs bei Kurvenfahrt von einem durch einen Fahrer des Landfahrzeugs vorgegebenen, gewünschten Kurvenradius verwendet werden.

Ferner ist es bevorzugt, dass das zweite Steuerverfahren durchgeführt wird, wenn ein zweiter, für übersteuernde Fahrzustände vorbestimmter Grenzwert vorliegt oder erreicht wird.

Als zweiter Grenzwert kann ein vorbestimmtes Giermoment des Landfahrzeugs um dessen Hochachse verwendet werden.

Das erfindungsgemäße System zur Steuerung von Fahrzuständen eines Landfahrzeugs umfasst eine Steuerung und eine mit der Steuerung verbundene Sensoranordnung, mit der untersteuemde und übersteuernde Fahrzustände des Landfahrzeugs ermittelt bzw. erfasst und in Abhängigkeit von Fahrzuständen Signale an die Steuerung ausgegeben werden können, die angeben, ob untersteuemde und/oder übersteuernde Fahrzustände vorliegen.

Insbesondere ist die Steuerung des erfindungsgemäßen Systems ausgelegt, in Antwort auf ein einen untersteuernden Fahrzustand angebendes Signal der Sensoranordnung erste Steuersignale für eine Bremsanlage und/oder Antriebskräfte für Räder des Landfahrzeugs bereitstellende (z.B. erzeugende, übertragende und/oder steuernde) Komponenten des Landfahrzeugs zu erzeugen, die diese in Betriebszustände bringen, die dem aktuell vorliegenden untersteuernden Fahrzustand entgegen wirken, und in Antwort auf ein einen übersteuernden Fahrzustand des Landfahrzeugs angebendes Signal der Sensoranordnung zweite Steuersignale für die Bremsanlage und/oder die Antriebskräfte für Räder des Landfahrzeugs bereitstellende Komponenten zu erzeugen, die diese in Betriebszustände bringen, die dem aktuell vorliegenden übersteuernden Fahrzustand entgegen wirken.

Des Weiteren ist es vorgesehen, dass die Steuerung die ersten Steuersignale und die zweiten Steuersignale gleichzeitig zu erzeugen vermag, wenn die Sensoranordnung wenigstens ein Signal ausgibt, das ein gleichzeitiges Vorliegen eines untersteuernden und eines übersteuernden Fahrzustands angibt.

Hier und im Folgenden ist unter "eingerichtet" zu verstehen, dass die Steuerung wenigstens strukturell ausgeführt ist, um die jeweils angegebenen technischen funktionalen Merkmale bereitzustellen. Darüber hinaus kann die Steuerung auch programmiert sein, um die jeweils angegebenen technischen funktionale Merkmale bereitzustellen, beispielsweise unter Verwendung von Softwarecode oder Computerprogrammen. So ist es beispielsweise vorgesehen, dass die Funktionen der Steuerung durch eine entsprechende Hardwarestruktur (z.B. ASIC) bereitgestellt werden. Die Steuerung kann auch so ausgeführt sein, dass sie eine allgemein verwendbare Hardwarestruktur aufweist, die in Verbindung mit einer entsprechenden Programmierung (z.B. fest implementierter Softwarecode, auf einem Computer lesbaren Speichermedium bereitgestelltes Computerprogramm, zum Betrieb herunterladbarer Softwarecode oder Computerprogramm) die technischen funktionalen Merkmale der Steuerung bereitstellt.

Vorzugsweise vermag die Steuerung ein von dem ersten Steuersignal umfasstes Steuersignal zu erzeugen, um der Bremsanlage anzugeben, dass wenigstens ein kurveninneres Rad, vorzugsweise das kurveninnere Hinterrad, des Landfahrzeugs gesteuert abgebremst werden soll.

Des Weiteren ist es vorgesehen, dass die Steuerung ein von dem ersten Steuersignal umfasstes Steuersignal für die Bremsanlage zu erzeugen vermag, um ein kurvenäußeres Hinterrad des Landfahrzeugs gesteuert abzubremsen und dabei ein Abbremsen des äußeren Vorderrads zu verhindern.

Die Steuerung kann ausgelegt sein, um für wenigstens eine der Antriebskräfte für Räder des Landfahrzeugs bereitstellenden Komponenten ein von dem ersten Steuersignal umfasstes Steuersignal zu erzeugen, um an wenigstens einem angetriebenen Vorderrad wirkende Antriebskräfte gesteuert zu reduzieren.

Die Steuerung kann die zweiten Steuersignale so erzeugen, dass sie ein Steuersignal für die Bremsanlage umfassen, um ein kurvenäußeres Vorderrad des Landfahrzeugs gesteuert abzubremsen.

Es ist vorgesehen, dass die Steuerung ein von dem zweiten Steuersignal umfasstes Steuersignal für wenigstens eine der Antriebskräfte bereitstellenden Komponenten zu erzeugen vermag, um entweder Antriebskräfte an wenigstens einem angetriebenen Hinterrad des Landfahrzeugs gesteuert zu reduzieren oder Antriebsmomente an wenigstens einem angetriebenen Rad des Landfahrzeugs gesteuert zu erhöhen.

Vorzugsweise ist die Steuerung ausgelegt, um die ersten und zweiten Steuersignale zu erzeugen, wenn wenigstens einer der oben genannten ersten und zweiten Grenzwerte vorliegt bzw. erreicht wird.

### Kurzbeschreibung der Zeichnungen

Bei der folgenden Beschreibung bevorzugter Ausführungsformen wird auf die beigefügten Zeichnungen Bezug genommen, von denen zeigen:
Fig. 1 eine schematische Darstellung einer bevorzugten Ausführungsform des erfindungsgemäßen Systems und damit verwendeter Komponenten eines Landfahrzeugs, und
Fig. 2, 3, 5, 8, 9 und 11 schematische Darstellungen zur Veranschaulichung bevorzugter Ausführungsformen der vorliegenden Erfindung.
Fig. 4, 6, 7 und 10 zeigen nicht erfindungsgemäße Varianten.

### Bevorzugte Ausführungsformen der Erfindung

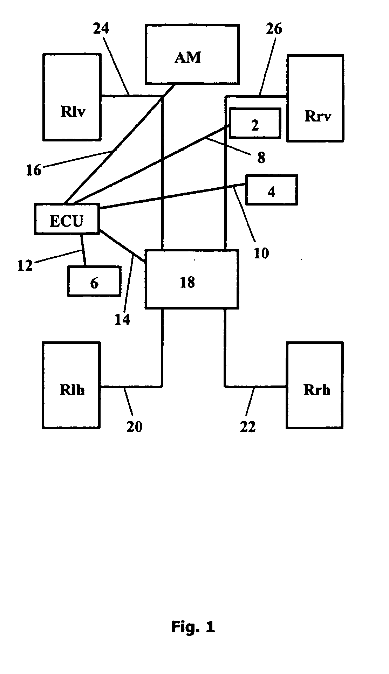

Fig. 1 zeigt eine bevorzugte Ausführungsform eines Systems zur Steuerung von Fahrzuständen eines Landfahrzeugs. Das System umfasst eine Steuerung ECU und eine Sensoreinheiten 2, 4 und 6 umfassende Sensoranordnung (nicht bezeichnet).

Die Sensoreinheit 2, die einen oder mehrere Sensoren umfassen kann, dient zur Erfassung von durch einen Fahrer zur Kurvenfahrt vorgegebenen Kurvenradius. Die Sensoreinheit 2 kann beispielsweise Positionen des Lenkrads (nicht gezeigt), Stellungen des Lenkgestänges (nicht gezeigt) und/oder Stellungen der gelenkten Räder erfassen.

Die Sensoreinheit 4, die einen oder mehrere Sensoren umfassen kann, dient zur Erfassung von bei einer Kurvenfahrt tatsächlich vorliegenden Kurvenradien. Hierfür können beispielsweise die für die ABS-Regelung ohnehin erforderlichen Raddrehzahlsensoren verwendet werden. Dabei wird der Unterschied der Raddrehzahlen zwischen den kurveninneren und den kurvenäußeren Rädern ausgeweitet.

Die Sensoreinheit 6, die einen oder mehrere Sensoren umfassen kann, dient zur Erfassung von auf das Landfahrzeug wirkenden Gierkräften um dessen Hochachse. Die Sensoreinheit 6 kann beispielsweise ein Giermomentensensor umfassen.

Von den Sensoreinheiten 2, 4 und 6 ausgegebene Signale, die deren jeweils erfasste Messgrößen angeben, werden über drahtgebundene und/oder drahtlose Signalstrecken 8, 10 und 12 zu der Steuerung ECU übertragen.

Signale der Steuerung ECU, die zur Steuerung von Fahrzuständen des Landfahrzeugs dienen, werden über drahtgebundene und/oder drahtlose Signalstrecken 14 und 16 übertragen.

Die Signalstrecke 14 ist für erste Steuersignale der Steuerung ECU vorgesehen, um eine Bremsanlage des Landfahrzeugs zu steuern. Die ersten Steuersignale können einer Steuereinheit (nicht gezeigt), falls vorhanden, der Bremsanlage bereitgestellt werden, die in Antwort darauf weitere Komponenten, insbesondere Ventilanordnungen, der Bremsanlage entsprechend steuert. Wenn die Steuerung ECU wenigstens teilweise die Bremsanlage steuert, kann mittels der ersten Steuersignale die Bremsanlage (beispielsweise Ventilanordnungen der Bremsanlage) wenigstens teilweise unmittelbar gesteuert werden.

Die Signalstrecke 16 dient zur Übertragung von zweiten Steuersignalen. Mittels der zweiten Steuersignale können Komponenten AM des Landfahrzeugs, die Antriebskräfte für Fahrzeugräder bereitstellen (z.B. erzeugen, übertragen, steuern), durch die Steuerung ECU gesteuert werden. Derartige Komponenten umfassen beispielsweise Fahrzeugmotoren, Getriebe, Kupplungen, Motormanagementsysteme und, im Fall von allradgetriebenen Landfahrzeugen, Komponenten, die Antriebskräfte auf Vorder- und Hinterräder verteilen.

Von der im Folgenden zugrunde gelegten Bremsanlage sind in Fig. 1 eine Steuereinheit 18 und hydraulische Verbindungen 20, 22, 24, 26 gezeigt. Über die Hydraulikverbindungen 20, 22, 24 und 26 kann Fahrzeugrädern Rlv, Rrv, Rlh und Rrh zugeordneten Radbremsen (nicht gezeigt) Hydraulikfluid zugeführt und entfernt werden, um in den Rädern Bremsdruck auf- und abbauen zu können.

Mittels der Sensoreinheiten 2, 4 und 6 werden jeweils aktuell vorliegende Fahrzustände des Landfahrzeugs erfasst. Wenn bei einer Kurvenfahrt ein untersteuernder und/oder ein übersteuernder Fahrzustand detektiert wird, erfolgt mittels der Steuerung ECU eine Steuerung der Bremsanlage und/oder wenigstens einer Antriebskräfte bereitstellenden Komponente, um dem Untersteuern, dem Übersteuern oder beiden Fahrzuständen entgegen zu wirken.

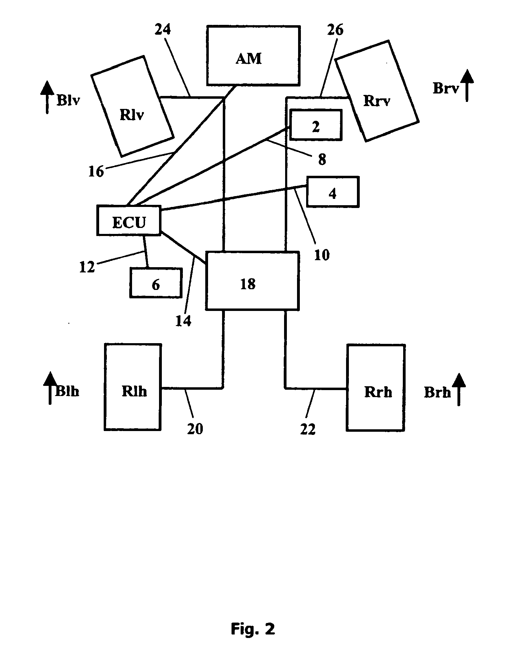

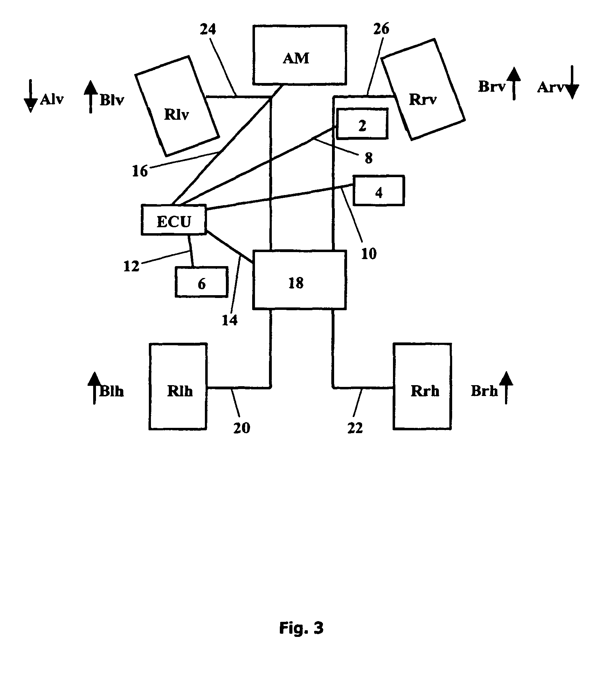

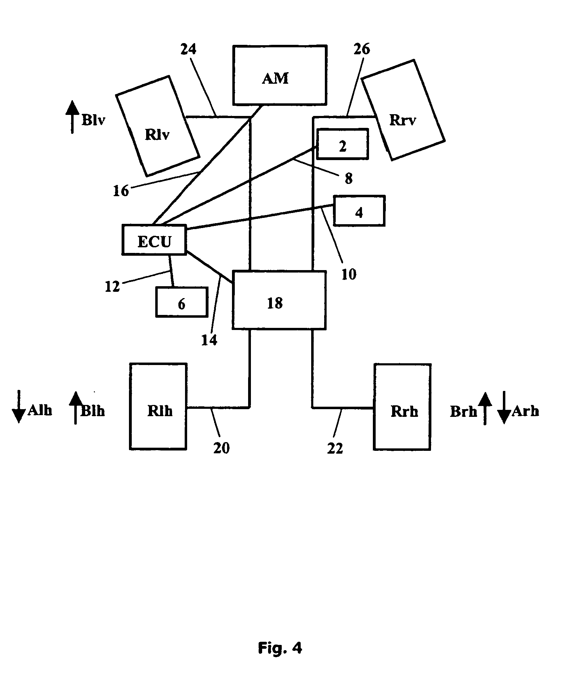

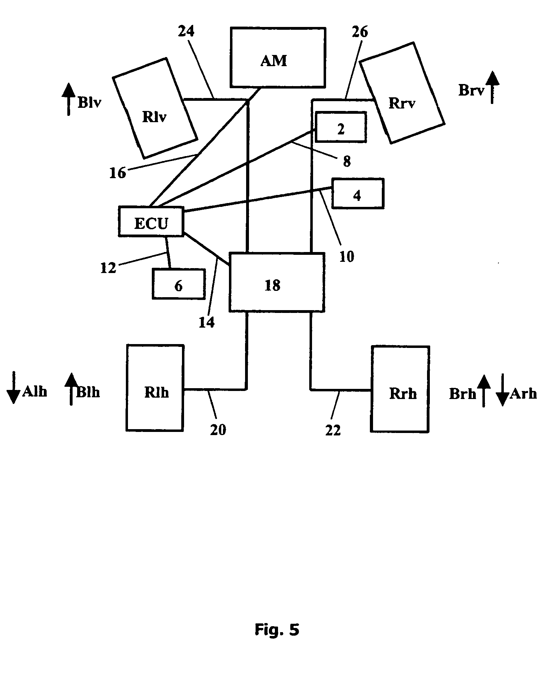

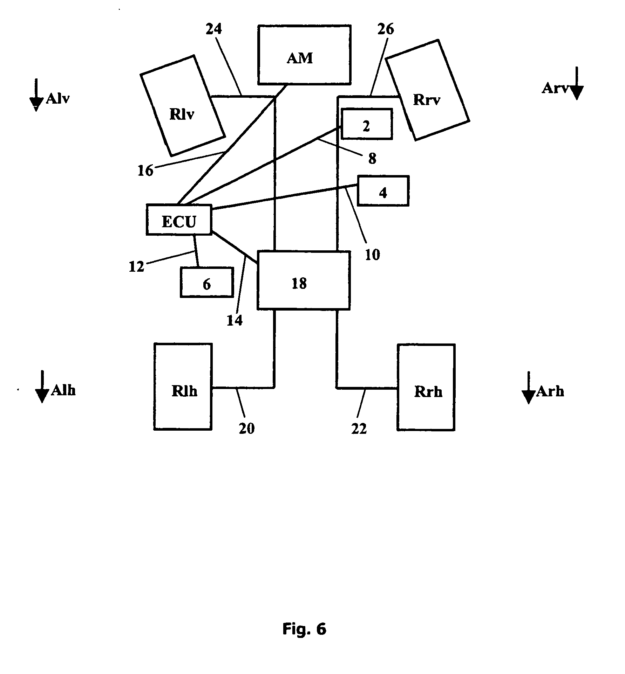

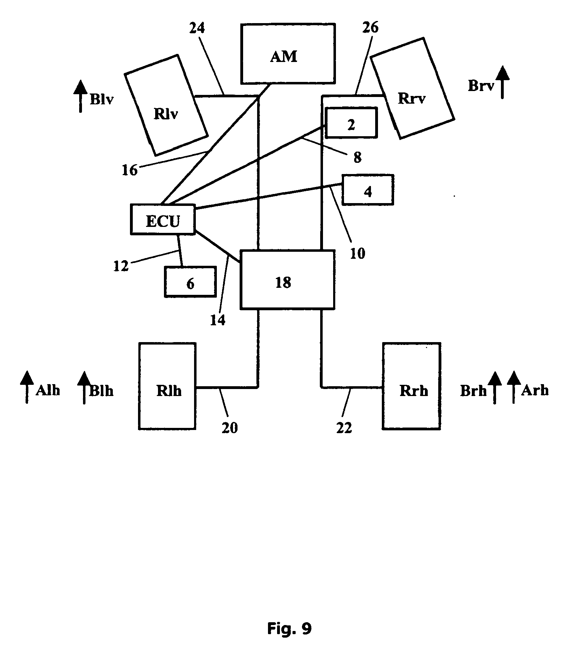

Bevorzugte Ausführungsformen einer solchen Steuerung von Fahrzuständen sind im Folgenden beschrieben. Die durch Fig. 2 veranschaulichte Ausführungsform ist zur Verwendung von Fahrzeugen mit Vorderradantrieb, mit Hinterradantrieb oder mit Allradantrieb geeignet. Bei der durch Fig. 3 veranschaulichten Ausführungsform wird von einem Fahrzeug mit Vorderradantrieb ausgegangen. Bei den durch Fig. 4 und 5 veranschaulichen Ausführungsformen wird von einem Fahrzeug mit Hinterradantrieb ausgegangen. Bei den durch Fig. 6, 7 und 8 veranschaulichten Ausführungsformen wird von einem Fahrzeug mit Allradantrieb ausgegangen, wobei dort übersteuernde Fahrzustände zum Teil durch eine Verringerung von Antriebskräften an Fahrzeugrädern erfolgen kann. Bei den durch Fig 9, 10 und 11 veranschaulichten Ausführungsformen wird ebenfalls von einem allradgetriebenen Fahrzeug ausgegangen, wobei hier übersteuernde Fahrzustände durch eine Erhöhung von Antriebskräften an Fahrzuständen zusätzlich kompensiert werden können.

In allen Fällen wird von einer Kurvenfahrt eines sich vorwärts bewegenden Landfahrzeugs nach links ausgegangen, wobei diesbezügliche Ausführungen entsprechend für eine entgegengesetzte Kurvenfahrt gelten.

Nach oben gerichtete Pfeile in den Figuren geben eine Erhöhung von Bremskräften bzw. Antriebskräften an. Nach unten gerichtete Pfeile in den Figuren geben eine Verringerung von Bremskräften bzw. Antriebskräften an.

Wird bei einem sich in Kurvenfahrt nach links befindenden Fahrzeug festgestellt, dass ein Untersteuern vorliegt, werden gemäß der Ausführungsform von Fig. 2 mittels der Steuerung ECU an dem kurveninneren Vorderrad Rlv, dem kurveninneren Hinterrad Rlh und dem kurvenäußeren Hinterrad Rrh Bremskräfte Blv, Blh und Brh erzeugt, die diese Räder gesteuert so abbremsen, dass Kräfte auf das Landfahrzeug wirken, die dem Untersteuern entgegen wirken.

Wird während der Steuerung der Bremsanlage zur Kompensation des untersteuernden Fahrzustands festgestellt, dass ein Übersteuern auftritt, werden mittels der Steuerung ECU an dem kurvenäußeren Vorderrad Rrv Bremskräfte Brv erzeugt, die zu auf das Landfahrzeug wirkenden Kräften führen, die dem Übersteuern entgegen wirken.

Im Gegensatz zu der bisherigen Vorgehensweise Maßnahmen zur Kompensation von Untersteuern zu beenden und nachfolgend nur Maßnahmen zur Kompensation von Übersteuern durchzuführen, wird durch die vorliegende Erfindung erreicht, dass die Maßnahmen zur Kompensation von Untersteuem, insbesondere eine Verringerung der Fahrzeuggeschwindigkeit, kontinuierlich durchgeführt werden, und zwar unabhängig von Maßnahmen zur Kompensation von Übersteuern.

Bei der durch Fig. 2 veranschaulichten Ausführungsform und bei im Folgenden beschriebenen Ausführungsformen, bei denen bei einer Kompensation von übersteuernden und untersteuernden Fahrzuständen das kurvenäußere Vorderrad gesteuert abgebremst wird, wird durch das zusätzlich abgebremste Rad das Fahrzeug weiter verzögert, was eine ergänzende Kompensation hinsichtlich untersteuernder Fahrzustände darstellen kann.

Die durch Fig. 3 veranschaulichte Ausführungsform unterscheidet sich von der Ausführungsform gemäß Fig. 2 dadurch, dass zusätzlich zu den zur Kompensation des Untersteuerns erzeugten Bremskräften an den angetriebenen Vorderrädern Rlv und Rrv wirkende Antriebskräfte Alv und Arv zur Untersteuerungskompensation reduziert werden.

Bei der durch Fig. 4 veranschaulichten Ausführungsform erfolgt eine Kompensation eines Untersteuems wie unter Bezugnahme auf Fig. 2 erläutert. Zur Kompensation eines (mit dem Untersteuern zeitgleich auftretenden) übersteuerendenden Fahrzustands werden auf die Hinterräder Rlh und Rrh wirkende Antriebskräfte Alh und Alrh, wie durch die nach unten gerichteten Pfeile angegeben, verringert.

Bei der durch Fig. 5 veranschaulichten Ausführungsform erfolgt die Kompensation eines untersteuernden Fahrzustands wie unter Bezugnahme auf Fig. 2 erläutert. Zur Kompensation eines Übersteuerns werden bei dieser Ausführungsform, wie unter Bezugnahme auf Fig. 2 erläutert, an dem kurvenäußeren Vorderrad Rrv wirkende Bremskräfte Brv erzeugt und, wie unter Bezugnahme auf Fig. 4 erläutert, an den Hinterrädern Rlh und Rrh wirkende Antriebskräfte Alh und Arh reduziert. Diese Bremskrafterzeugung und Antriebskraftverringerung kann zeitgleich oder nacheinander eingeleitet werden.

Bei der durch Fig. 6 veranschaulichten Ausführungsform werden zur Kompensation eines untersteuernden Fahrzustands, wie unter Bezugnahme auf Fig. 3 erläutert, Antriebskräfte Alv und Arv an den Vorderrädern Rlv und Rrv reduziert. Zur Kompensation eines Übersteuems werden bei dieser Ausführungsform, wie unter Bezugnahme auf Fig. 4 erläutert, an den Hinterrädern Rlh und Rrh wirkende Antriebskräfte Alh und Arh verringert.

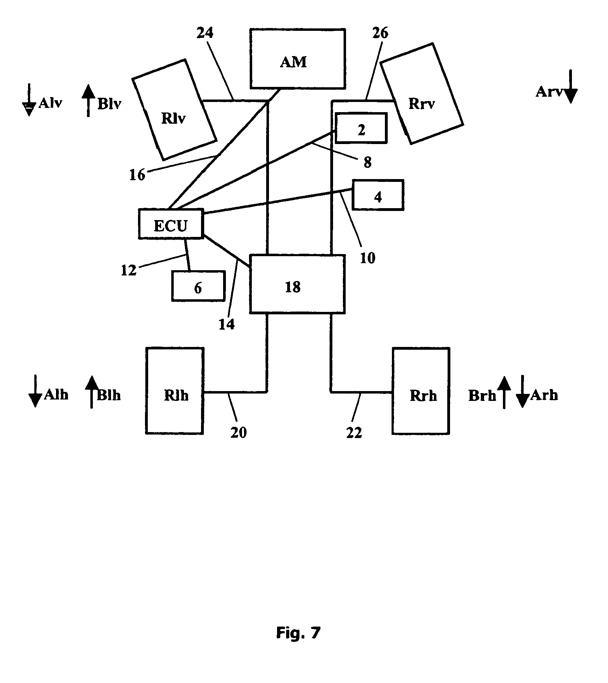

Die durch Fig. 7 veranschaulichte Ausführungsform unterscheidet sich von der unter Bezugnahme auf Fig. 3 erläuterten Ausführungsform dadurch, dass einem Übersteuern entgegengewirkt wird, indem an den Hinterrädern Rlh und Rrh wirkende Antriebskräfte Alh und Arh verringert werden.

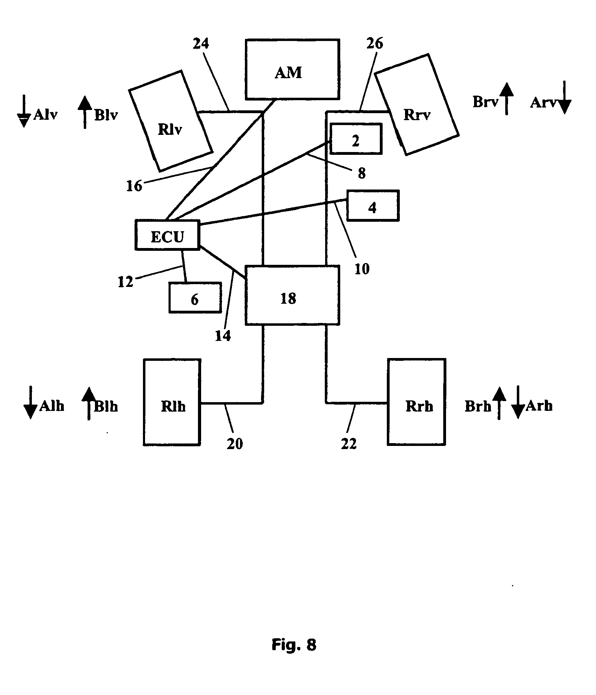

Die durch Fig. 8 veranschaulichte Ausführungsform verwendet die unter Bezugnahme auf Fig. 3 und 7 erläuterte Kompensation eines untersteuernden Fahrzustands und die unter Bezugnahme auf Fig. 5 erläuterte Kompensation eines übersteuernden Fahrzustands.

Bei den durch Fig. 9, 10 und 11 veranschaulichten Ausführungsformen wird hinsichtlich einer Kompensation von übersteuernden Fahrzuständen durch Steuerung von auf Fahrzeugräder wirkenden Antriebskräften im Gegensatz zu oben beschriebenen Ausführungsformen eine Antriebskrafterhöhung verwendet.

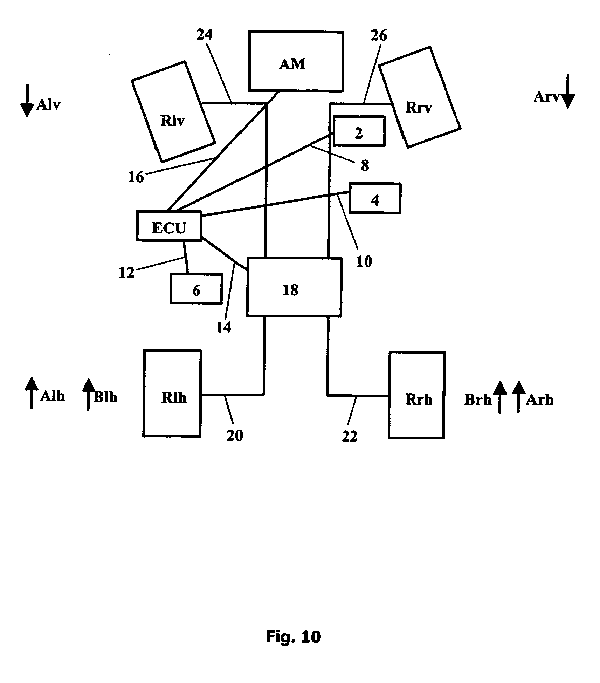

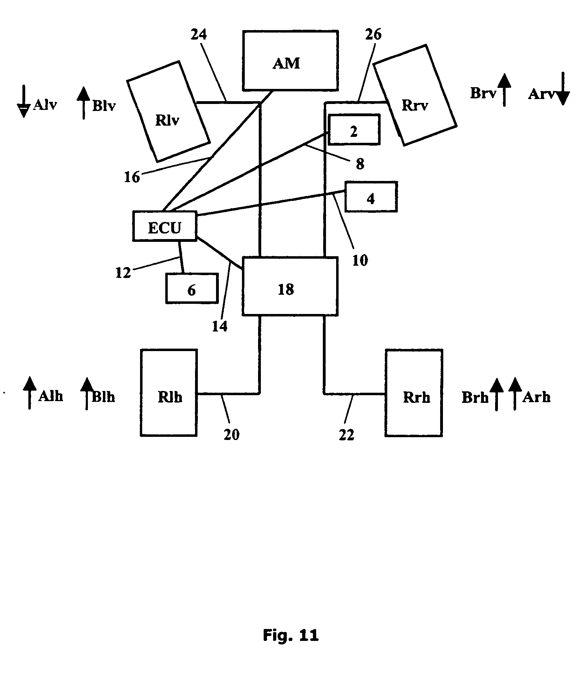

Zur Kompensation von untersteuernden Fahrzuständen wird bei der durch Fig. 9 veranschaulichten Ausführungsform eine unter Bezugnahme auf Fig. 2 erläuterte Bremskrafterzeugung, wird bei der durch Fig. 10 veranschaulichten Ausführungsform eine unter Bezugnahme auf Fig. 6 erläuterte Verringerung von Antriebskräften und wird bei der durch Fig. 11 veranschaulichten Ausführungsform eine unter Bezugnahme auf Fig. 3 erläuterte Bremskrafterhöhung und Antriebskraftverringerung verwendet.

Bei den Ausführungsformen von Fig. 9, 10 und 11 werden übersteuernde Fahrzustände kompensiert, indem an dem kurvenäußeren Vorderrad Rrv Bremskräfte Brv erzeugt und an wenigstens einem angetriebenen Rad Antriebskräfte erhöht werden. Dabei ist es vorgesehen, die Bremskrafterzeugung vor der Antriebskrafterhöhung einzuleiten, dies in umgekehrter Reihenfolge durchzuführen oder beide Maßnahmen gleichzeitig einzuleiten.

## Patentansprüche

1. Verfahren zur Steuerung von Fahrzuständen eines Landfahrzeugs, mit
- einem ersten Steuerverfahren für untersteuemde Fahrzustände des Landfahrzeugs bei Kurvenfahrt zur gesteuerten Erzeugung von an Rädern des Landfahrzeugs wirkenden Bremskräften und/oder Antriebskräften, wenn ein untersteuernder Fahrzugstand vorliegt, die dem untersteuernden Fahrzustand entgegen wirken, und
- einem zweiten Steuerverfahren für übersteuernde Fahrzustände des Landfahrzeugs bei Kurvenfahrt zur gesteuerten Erzeugung von an Rädern des Landfahrzeugs wirkenden Bremskräften und/oder Antriebskräften, wenn ein übersteuernder Fahrzustand vorliegt, die dem übersteuernden Fahrzustand entgegen wirken, wobei
- das erste Steuerverfahren und das zweite Steuerverfahren gleichzeitig durchgeführt werden, **dadurch gekennzeichnet, dass** das erste und das zweite Steuerverfahren dabei an einem kurveninneren Vorderrad, einem kurveninneren Hinterrad, einem kurvenäußeren Vorderrad und einem kurvenäußerem Hinterrad wirkende Bremskräfte gesteuert erzeugen, wenn der untersteuernde Fahrzustand und der übersteuernde Fahrzustand gleichzeitig vorliegen.

2. Verfahren nach Anspruch 1, bei dem das erste Steuerverfahren umfasst, wenigstens ein kurveninneres Rad des Landfahrzeugs gesteuert abzubremsen.

3. Verfahren nach Anspruch 1 oder 2, bei dem das erste Steuerverfahren umfasst, das kurvenäußere Hinterrad des Landfahrzeugs gesteuert abzubremsen.

4. Verfahren nach einem der vorherigen Ansprüche, bei dem das erste Steuerverfahren umfasst, Antriebsmomente an wenigstens einem angetriebenen Vorderrad gesteuert zu reduzieren.

5. Verfahren nach einem der vorherigen Ansprüche, bei dem das zweite Steuerverfahren umfasst, das kurvenäußeres Vorderrad des Landfahrzeugs gesteuert abzubremsen.

6. Verfahren nach einem der Ansprüche 1 bis 5, bei dem das zweite Steuerverfahren umfasst, Antriebskräfte an wenigstens einem angetriebenen Hinterrad gesteuert zu reduzieren.

7. Verfahren nach einem der Ansprüche 1 bis 5, bei dem das zweite Steuerverfahren umfasst, Antriebskräfte an wenigstens einem angetriebenen Rad gesteuert zu erhöhen.

8. Verfahren nach einem der vorherigen Ansprüche, bei dem das erste Steuerverfahren durchgeführt wird, wenn ein für untersteuemde Fahrzustände, erster Grenzwert vorliegt.

9. Verfahren nach Anspruch 8, bei dem der erste Grenzwert eine Abweichung eines bei Kurvenfahrt des Landfahrzeugs tatsächlich vorliegenden Kurvenradius von einem von einem Fahrer des Ladfahrzeugs vorgegebenen Kurvenradius angibt.

10. Verfahren nach einem der vorherigen Ansprüche, bei dem das zweite Steuerverfahren durchgeführt wird, wenn ein für übersteuernde Fahrzustände, zweiter Grenzwert vorliegt.

11. Verfahren nach Anspruch 10, bei dem der zweite Grenzwert ein vorbestimmtes Giermoment des Landfahrzeugs um dessen Hochachse angibt.

12. System zur Steuerung von Fahrzuständen eines Landfahrzeugs, mit
- einer Steuerung (ECU), und
- einer mit der Steuerung (ECU) verbundenen Sensoranordnung zur Erfassung von untersteuernden und übersteuernden Fahrzuständen des Landfahrzeugs und zur Ausgabe von Signalen an die Steuerung, die einen untersteuernden Fahrzustand und/oder einen übersteuernden Fahrzustand angeben, wobei
- die Steuerung (ECU) ausgelegt ist,
- in Antwort auf ein einen untersteuernden Fahrzustand angebendes Signal der Senderanordnung erste Steuersignale für eine Bremsanlage und/oder Antriebskräfte für Räder des Landfahrzeugs bereitstellende Komponenten des Landfahrzeugs zu erzeugen, um diese so zu steuern, dass sie dem untersteuernden Fahrzustand entgegen wirken,
- in Antwort auf ein einen übersteuernden Fahrzustand angebendes Signal der Sensoranordnung zweite Steuersignale für die Bremsanlage und/oder Antriebskräfte für Räder des Landfahrzeugs bereitstellende Komponenten des Landfahrzeugs zu erzeugen, um diese so zu betreiben, dass sie dem übersteuernden Fahrzustand entgegen wirken und,
- die ersten Steuersignale und die zweiten Steuersignale gleichzeitig zu erzeugen, **dadurch gekennzeichnet, dass** die Steuerung (ECU) ausgelegt ist, dabei ein kurveninneres Vorderrad, ein kurveninneres Hinterrad, ein kurvenäußeres Vorderrad und ein kurvenäußeres Hinterrad gesteuert abzubremsen, wenn ein Signal der Sensoranordnung ein gleichzeitiges Vorliegen eines untersteuernden Fahrzustands und eines übersteuernden Fahrzustands angibt.

13. System nach Anspruch 12, bei dem die Steuerung (ECU) ausgelegt ist, ein von den ersten Steuersignalen umfasstes Steuersignal für die Bremsanlage zu erzeugen, um wenigstens ein kurveninneres Rad des Landfahrzeugs gesteuert abzubremsen.

14. System nach Anspruch 12 oder 13, bei dem die Steuerung (ECU) ausgelegt ist, ein von dem ersten Steuersignal umfasstes Steuersignal für die Bremsanlage zu erzeugen, um ein kurvenäußeres Hinterrad des Landfahrzeugs gesteuert abzubremsen.

15. System nach einem der Ansprüche 12 bis 14, bei dem die Steuerung (ECU) ausgelegt ist, ein von dem ersten Steuersignal umfasstes Steuersignal für wenigstens eine der Antriebskräfte für Räder des Landfahrzeugs bereitstellenden Komponenten zu erzeugen, um Antriebskräfte an wenigstens einem angetriebenen Vorderrad des Landfahrzeugs gesteuert zu reduzieren.

16. System nach einem der Ansprüche 12 bis 15, bei dem die Steuerung (ECU) ausgelegt ist, ein von dem zweiten Steuersignal umfasstes Steuersignal für die Bremsanlage zu erzeugen, um ein kurvenäußeres Vorderrad des Landfahrzeugs gesteuert abzubremsen.

17. System nach einem der Ansprüche 12 bis 16, bei dem die Steuerung (ECU) ausgelegt ist, ein von den zweiten Steuersignalen umfasstes Steuersignal für wenigstens eine der Antriebskräfte für Räder des Landfahrzeugs bereitstellenden Komponenten zu erzeugen, um Antriebskräfte an wenigstens einem angetriebenen Hinterrad des Landfahrzeugs gesteuert zu reduzieren.

18. System nach einem der Ansprüche 12 bis 16, bei dem die. Steuerung (ECU) ausgelegt ist, ein von den zweiten Steuersignalen umfasstes Steuersignal für wenigstens eine der Antriebskräfte für Räder des Landfahrzeugs bereitstellenden Komponenten zu erzeugen, um Antriebskräfte an wenigstens einem angetriebenen Rad des Landfahrzeugs gesteuert zu erhöhen.

19. System nach einem der Ansprüche 12 bis 18, bei dem die Sensoranordnung ausgelegt ist, ein einen untersteuernden Fahrzustand des Landfahrzeugs angebendes Signal auszugeben, wenn ein für untersteuernde Fahrzustände vorbestimmter, erster Grenzwert vorliegt.

20. System nach Anspruch 19, bei dem der erste Grenzwert eine vorbestimmte Abweichung eines tatsächlichen, bei Kurvenfahrt des Landfahrzeugs vorliegenden Kurvenradius von einem durch einen Fahrer des Landfahrzeugs vorgegebenen Kurvenradius angibt.

21. System nach einem der Ansprüche 12 bis 20, bei dem die Sensoranordnung ausgelegt ist, ein einen übersteuernden Fahrzustand des Landfahrzeugs angebendes Signal auszugeben, wenn ein für übersteuernde Fahrzustände vorbestimmter, zweiter Grenzwert vorliegt.

22. System nach Anspruch 21, bei dem der zweite Grenzwert ein vorbestimmtes Giermoment des Landfahrzeugs um dessen Hochachse angibt.

## Claims

1. Method for controlling driving conditions of a land vehicle, comprising
- a first control method for understeering driving conditions of the land vehicle when taking a bend for generating braking forces and/or driving forces acting on wheels of the land vehicle in a controlled manner when an understeering driving condition exists, these counteracting the understeering driving condition, and
- a second control method for oversteering driving conditions of the land vehicle when taking a bend for generating braking forces and/or driving forces acting on wheels of the land vehicle in a controlled manner when an oversteering driving condition exists, these counteracting the oversteering driving condition, wherein
- the first control method and the second control method are carried out at the same time and **characterised in that** the first and the second control methods in this case generate in a controlled manner braking forces which act on a front wheel inside of the bend, a rear wheel inside of the bend, a front wheel outside of the bend and a rear wheel outside of the bend when the understeering driving condition and the oversteering driving condition exist at the same time.

2. Method according to Claim 1, wherein the first control method comprises the controlled braking at least of one wheel of the land vehicle which is on the inside of the bend.

3. Method according to Claim 1 or 2, wherein the first control method comprises the controlled braking of the rear wheel of the land vehicle which is on the outside of the bend.

4. Method according to one of the preceding Claims, wherein the first control method comprises the controlled reduction of driving torques at least at one driven front wheel.

5. Method according to one of the preceding Claims, wherein the second control method comprises the controlled braking of the front wheel of the land vehicle which is on the outside of the bend.

6. Method according to one of Claims 1 to 5, wherein the second control method comprises the controlled reduction of driving forces at least at one driven rear wheel.

7. Method according to one of Claims 1 to 5, wherein the second control method comprises the controlled increase of driving forces at least at one driven wheel.

8. Method according to any one of the preceding Claims, wherein the first control method is carried out when a first limit value for understeering driving conditions exists.

9. Method according to Claim 8, wherein the first limit value indicates a deviation of a radius of bend actually existing when the land vehicle takes a bend from a radius of bend predetermined by a driver of the land vehicle.

10. Method according to one of the preceding Claims, wherein the second control method is carried out when a second limit value for oversteering driving conditions exists.

11. Method according to Claim 10, wherein the second limit value indicates a predetermined yawing moment of the land vehicle about its vertical axis.

12. System for controlling driving conditions of a land vehicle, comprising
- a control unit (ECU), and
- a sensor arrangement which is connected to the control unit (ECU) for detecting understeering and oversteering driving conditions of the land vehicle and for emitting signals to the control unit which indicate an understeering driving condition and/or an oversteering driving condition, wherein
- the control unit (ECU) is designed
- to generate, in response to a signal of the sensor arrangement indicating an understeering driving condition, first control signals for a brake system and/or components of the land vehicle providing driving forces for wheels of the land vehicle in order to control these so that they counteract the understeering driving condition,
- to generate, in response to a signal of the sensor arrangement indicating an oversteering driving condition, second control signals for the brake system and/or components of the land vehicle providing driving forces for wheels of the land vehicle in order to operate these so that they counteract the oversteering driving condition, and
- to generate the first control signals and the second control signals at the same time
**characterized in that** the control unit (ECU) is designed to brake in this case in a controlled manner a front wheel inside of the bend, a rear wheel inside of the bend, a front wheel outside of the bend and a rear wheel outsaide of the bend if a signal of the sensor arrangement indicates the simultaneous existence of an understeering driving condition and an oversteering driving condition.

13. System according to Claim 12, wherein the control unit (ECU) is designed to generate a control signal which is comprised by the first control signals in order to brake at least one wheel of the land vehicle which is on the inside of the bend in a controlled manner.

14. System according to Claim 12 or 13, wherein the control unit (ECU) is designed to generate a control signal which is comprised by the first control signal in order to brake a rear wheel of the land vehicle which is on the outside of the bend in a controlled manner.

15. System according to one of Claims 12 to 14, wherein the control unit (ECU) is designed to generate a control signal which is comprised by the first control signal for at least one of the components providing driving forces for wheels of the land vehicle in order to reduce driving forces at least at one driven front wheel of the land vehicle in a controlled manner.

16. System according to one of Claims 12 to 15, wherein the control unit (ECU) is designed to generate a control signal which is comprised by the second control signal in order to brake a front wheel of the land vehicle which is on the outside of the bend in a controlled manner.

17. System according to one of Claims 12 to 16, wherein the control unit (ECU) is designed to generate a control signal which is comprised by the second control signals for at least one of the components providing driving forces for wheels of the land vehicle in order to reduce driving forces at least at one driven rear wheel of the land vehicle in a controlled manner.

18. System according to one of Claims 12 to 16, wherein the control unit (ECU) is designed to generate a control signal which is comprised by the second control signals for at least one of the components providing driving forces for wheels of the land vehicle in order to increase driving forces at least at one driven wheel of the land vehicle in a controlled manner.

19. System according to one of Claims 12 to 18, wherein the sensor arrangement is designed to emit a signal indicating an understeering driving condition of the land vehicle when a first limit value predetermined for understeering driving conditions exists.

20. System according to Claim 19, wherein the first limit value indicates a predetermined deviation of an actual radius of bend existing when the land vehicle takes a bend from a radius of bend predetermined by a driver of the land vehicle.

21. System according to one of Claims 12 to 20, wherein the sensor arrangement is designed to emit a signal indicating an oversteering driving condition of the land vehicle when a second limit value predetermined for oversteering driving conditions exists.

22. System according to Claim 21, in which the second limit value indicates a predetermined yawing moment of the land vehicle about its vertical axis.

## Revendications

1. Procédé de commande de conditions de roulage d'un véhicule terrestre, comportant - un premier procédé de commande pour des conditions de roulage d'un véhicule terrestre sous-vireur dans les virages, pour la production contrôlée de forces de freinage et/ou de forces d'entraînement qui agissent sur les roues du véhicule terrestre lorsque ce dernier sous-vire et agissent contre le comportement sous-vireur, et
- un second procédé de commande pour des conditions de roulage d'un véhicule terrestre survireur dans les virages, pour la production contrôlée de forces de freinage et/ou de forces d'entraînement qui agissent sur les roues du véhicule terrestre lorsque ce dernier survire et agissent contre le comportement survireur,
- le premier procédé de commande et le second procédé de commande étant effectués simultanément, **caractérisé en ce que** le premier procédé de commande et le second procédé de commande produisent des forces de freinage agissant ce faisant sur une roue avant côté intérieur du virage, sur une roue arrière côté intérieur du virage, sur une roue avant côté extérieur du virage et sur une roue arrière côté extérieur du virage lorsqu'il y a simultanément sous-virage et survirage du véhicule terrestre.

2. Procédé selon la revendication 1, dans le cadre duquel le premier procédé de commande consiste à freiner de manière contrôlée au moins une roue côté intérieur du virage du véhicule terrestre.

3. Procédé selon la revendication 1 ou 2, dans le cadre duquel le premier procédé de commande consiste à freiner de manière contrôlée la roue arrière côté extérieur du virage du véhicule terrestre.

4. Procédé selon l'une des revendications précédentes, dans le cadre duquel le premier procédé de commande consiste à réduire de manière contrôlée des couples d'entraînement sur au moins une roue avant entraînée.

5. Procédé selon l'une des revendications précédentes, dans le cadre duquel le second procédé de commande consiste à freiner de manière contrôlée la roue avant côté extérieur du virage du véhicule terrestre.

6. Procédé selon l'une des revendications 1 à 5, dans le cadre duquel le second procédé de commande consiste à réduire de manière contrôlée des forces d'entraînement sur au moins une roue arrière entraînée.

7. Procédé selon l'une des revendications 1 à 5, dans le cadre duquel le second procédé de commande consiste à augmenter de manière contrôlée des forces d'entraînement sur au moins une roue entraînée.

8. Procédé selon l'une des revendications précédentes, dans le cadre duquel le premier procédé de commande est effectué lorsqu'il existe une première valeur limite pour des comportements sous-vireurs.

9. Procédé selon la revendication 8, dans le cadre duquel la première valeur limite indique une divergence entre un rayon de courbe existant réellement lors de la prise du virage par le véhicule terrestre et un rayon de courbe prédéfini par le conducteur du véhicule terrestre.

10. Procédé selon l'une des revendications précédentes, dans le cadre duquel le second procédé de commande est effectué lorsqu'il existe une seconde valeur limite pour des comportements survireurs.

11. Procédé selon la revendication 10, dans le cadre duquel la seconde valeur limite indique un couple de lacet prédéterminé du véhicule terrestre autour de son axe vertical.

12. Système de commande de conditions de roulage d'un véhicule terrestre, comportant - une commande (ECU) et
- un dispositif de capteurs relié à ladite commande (ECU) pour détecter des comportements sous-vireurs et survireurs du véhicule terrestre et transmettre à la commande des signaux qui indiquent un comportement sous-vireur et/ou un comportement survireur du véhicule terrestre,
- la commande (ECU) étant conçue
- pour produire, en réponse à un signal du dispositif de capteurs indiquant un comportement sous-vireur, des premiers signaux de commande pour l'installation de freinage et/ou des composants fournissant des forces d'entraînement pour les roues du véhicule terrestre pour contrôler celles-ci de telle sorte qu'elles agissent contre le comportement sous-vireur du véhicule terrestre,
- pour produire, en réponse à un signal du dispositif de capteurs indiquant un comportement survireur, des seconds signaux de commande pour l'installation de freinage et/ou des composants fournissant des forces d'entraînement pour les roues du véhicule terrestre pour que celles-ci agissent contre le comportement survireur du véhicule terrestre,
- pour produire simultanément les premiers et les seconds signaux de commande, **caractérisé en ce que** la commande (ECU) est conçue ce faisant pour freiner de manière contrôlée une roue avant côté intérieur du virage, une roue arrière côté intérieur du virage, une roue avant côté extérieur du virage et une roue arrière côté extérieur du virage lorsqu'un signal du dispositif de capteurs indique la présence simultanée d'un comportement sous-vireur et d'un comportement survireur du véhicule terrestre.

13. Système selon la revendication 12, dans le cadre duquel la commande (ECU) est conçue pour produire un signal de commande compris dans les premiers signaux de commande pour l'installation de freinage pour freiner de manière contrôlée au moins une roue côté intérieur du virage du véhicule terrestre.

14. Système selon la revendication 12 ou 13, dans le cadre duquel la commande (ECU) est conçue pour produire un signal de commande compris dans le premier signal de commande pour l'installation de freinage pour freiner de manière contrôlée une roue arrière côté extérieur du virage du véhicule terrestre.

15. Système selon l'une des revendications 12 à 14, dans le cadre duquel la commande (ECU) est conçue pour produire un signal de commande compris dans le premier signal de commande pour au moins un des composants fournissant des forces d'entraînement pour les roues du véhicule terrestre pour réduire de manière contrôlée les forces d'entraînement sur au moins une roue avant entraînée du véhicule terrestre.

16. Système selon l'une des revendications 12 à 15, dans le cadre duquel la commande (ECU) est conçue pour produire un signal de commande compris dans le second signal de commande pour l'installation de freinage pour freiner de manière contrôlée une roue avant côté extérieur du virage du véhicule terrestre.

17. Système selon l'une des revendications 12 à 16, dans le cadre duquel la commande (ECU) est conçue pour produire un signal de commande compris dans les seconds signaux de commande pour au moins un des composants fournissant des forces d'entraînement pour les roues du véhicule terrestre pour réduire de manière contrôlée les forces d'entraînement sur au moins une roue arrière entraînée du véhicule terrestre.

18. Système selon l'une des revendications 12 à 16, dans le cadre duquel la commande (ECU) est conçue pour produire un signal de commande compris dans les seconds signaux de commande pour au moins un des composants fournissant des forces d'entraînement pour les roues du véhicule terrestre pour accroître de manière contrôlée les forces d'entraînement sur au moins une roue entraînée du véhicule terrestre.

19. Système selon l'une des revendications 12 à 18, dans le cadre duquel le dispositif de capteurs est conçu pour émettre un signal indiquant un comportement sous-vireur du véhicule terrestre lorsqu'il existe une première valeur limite prédéterminée pour des comportements sous-vireurs.

20. Système selon la revendication 19, dans le cadre duquel la première valeur limite indique une divergence prédéterminée entre un rayon de courbe existant réellement lors de la prise du virage par le véhicule terrestre et un rayon de courbe prédéfini par le conducteur du véhicule terrestre.

21. Système selon l'une des revendications 12 à 20, dans le cadre duquel le dispositif de capteurs est conçu pour émettre un signal indiquant un comportement survireur du véhicule terrestre lorsqu'il existe une seconde valeur limite prédéterminée pour des comportements survireurs.

22. Système selon la revendication 21, dans le cadre duquel la seconde valeur limite indique un couple de lacet prédéterminé du véhicule terrestre autour de son axe vertical.
